# EUROPEAN PATENT APPLICATION

(11) **EP 3 798 713 A1**
(43) Date of publication of application: **31.03.2021**
(21) Application number: 19200211.1
(22) Date of filing: 27.09.2019
(51) Int. Cl.: G02B 21/08, G01N 21/01, G01N 21/15, G01N 21/64, G02B 21/16, G02B 21/24, G02B 26/08, G02B 21/32

(54) **MICROSCOPE FOR EXAMINING A SAMPLE AND CORRESPONDING METHOD**

(71) Applicant: Leica Microsystems CMS GmbH, 35578 Wetzlar (DE)
(72) Inventor: Deissler, Benjamin, 35510 Butzbach (DE); Schumann, Christian, 35423 Lich (DE)
(74) Representative: m patent group

(57) **Abstract**

The present invention relates to a microscope (100) for examining a sample (114), said microscope comprising imaging optics (140) for imaging at least a part of the sample to be examined, said imaging optics defining an optical axis (150), a transmitted-light illumination module (130), said module comprising a transmitted-light light source (132) and transmitted-light optics (134) for generating a transmitted-light beam path (136), and a deflection element (220) suited for deflecting the transmitted-light beam path, wherein the deflection element (220) is configured to be placed at least into a first and a second position (A,B), wherein in the first position (A), the deflection element (220) is arranged on the optical axis (150) such that the transmitted-light beam path (136) is deflected onto and aligned with the optical axis (150), and, in the second position (B), the deflection element (220) is arranged outside the optical axis (150).

## Description

### Field

The present inventive concept generally relates to a microscope for examining a sample, and, more particularly, to a microscope for examining a sample using a transmitted-light beam while making use of a sample manipulator such as a pipette for manipulating the sample before or during the examination, particularly in case of biological samples. The present inventive concept also relates to a corresponding method for examining a sample.

### Background

Biological samples to be examined by a microscope are often kept in well plates comprising a large number of cells, also called "wells", for receiving biological samples, especially for cell culture and screening of technical bioreactions. It is often desired to add active substances to certain cells of the well plate without moving the well plate (microtiter plate). Also other manipulations of the sample are conceivable. In a common microscope with a transmitted-light illumination module for generating a transmitted-light beam, it is possible to pipette or manipulate the sample diagonally from or angularly to the side of a cell of the well plate. There are microscope systems with transmitted-light illumination in which the entire transmitted-light illumination module can be moved laterally when pipetting on the optical axis, i. e. in a vertical direction onto the sample.

It is, however, not advantageous to pipette diagonally from the side. On the one hand, this influences the amount of liquid to be pipetted with common pipettes, on the other hand, it is quite difficult to find the right cell containing the sample to be pipetted, when using microtiter plates (well plates) with large number of wells (e. g. 96, 384 or 1536) and having a slanted access to the well. Up to now, in order to be able to manipulate or pipette a sample from a direction as vertical as possible, the transmitted-light illumination module or the well plate/sample holder has to be moved laterally to provide access to the sample. In case of moving the transmitted-light illumination module, complex motorisation is necessary. Further, the process is slowed down. Finally, a relatively large space for moving the illumination module is required. In case of moving the sample holder, the sample is likely to be disturbed in the process and observation of the sample during pipetting is thus ruled out.

A typical microscope for examining a sample using a transmitted-light illumination module is disclosed in the DE 10 2017 110 638 B3. The transmitted-light illumination module of the microscope disclosed in this document is arranged along the optical axis defined by the microscope objective. The microscope further comprises an incident-light illumination module for generating an incident-light beam which is at least partly reflected or re-emitted in case of fluorescence by the sample to be examined, the resulting beam being imaged by imaging optics. The same imaging optics are used for imaging the transmitted-light beam transmitted through the sample to be examined.

### Summary

In microscopic examinations of samples using the kind of microscopes as discussed above, there is a need for an improved operating concept for such microscopes, particularly with regard to a time efficient examining of a sample with a minimum of disturbance of the sample.

Embodiments of the present inventive concept provide a microscope for examining the sample, comprising imaging optics for imaging at least a part of the sample to be examined, said imaging optics defining an optical axis, a transmitted-light illumination module, said module comprising a transmitted-light light source and a transmitted-light optics for generating a transmitted-light beam path, and a deflection element suited for deflecting the transmitted-light beam path. The deflection element of this microscope is configured to be placed at least into a first and into a second position, wherein in the first position, the deflection element is arranged on the optical axis such that the transmitted-light beam path is deflected onto and aligned with the optical axis, and, in the second position, the deflection element is arranged outside the optical axis.

"Imaging optics" in the meaning of the present application are in particular a microscope objective and usually a microscope tube. The corresponding image can be viewed directly through an eyepiece or indirectly by using a camera. Generally, the microscope objective defines the optical axis. The "transmitted-light illumination module" typically comprises a light source, typically an LED light source, transmitted-light optics, typically comprising one or more lenses and sometimes an aperture for forming a transmitted-light beam propagating along a transmitted-light beam path in the direction of the sample to be examined.

The "deflection element" in the meaning of the present application can be a simple mirror, a dichroic prism or another optical element for deflecting the transmitted-light beam. As opposed to the arrangement according to the document DE 10 2017 110 638 B3 mentioned above, the transmitted-light beam path of the present application is deflected by the deflection element such that - for examining the sample - the transmitted-light beam path is deflected onto and aligned with the optical axis. In this first position of the deflection element, a transmitted-light beam illuminates the sample such that an image of the sample by detecting the transmitted light can be generated. In a second position, the deflection element is arranged outside the optical axis, i. e. the sample is no longer illuminated by the transmitted-light beam and, at the same time, the optical axis is freely or unobstructedly accessible for manipulating the sample e. g. by a pipette or another sample manipulator. Thus, instead of laterally moving the entire transmitted-light illumination module or the sample holder itself, only the deflection element has to be moved out of the optical axis which can be done easily and quickly without disturbing the sample to be examined.

According to a second aspect, a method for examining a sample in a microscope is provided, said method comprising the steps of examining a sample in a microscope by means of a transmitted-light beam transmitting at least a part of the sample, said transmitted-light beam being generated by a transmitted-light light source and transmitted-light optics, and by imaging said part of the sample by imaging optics using the transmitted-light beam transmitted through the sample. In this method, a deflection element is provided for alternatively enabling or disabling transmission of the sample by the transmitted-light beam, wherein, for enabling transmission of the sample, the deflection element is placed into a first position for deflecting the transmitted-light beam and directing it onto the sample, and wherein, for disabling transmission of the sample, the deflection element is placed into a second position in which an optical path between the sample and the transmitted-light light source is disabled. In its second position, the deflection element is placed outside the optical axis such that the optical path between the sample and the transmitted-light light source is interrupted or, in other words, does not exit any longer. In this case, the sample is freely accessible from above along the optical axis of the microscope. In order to avoid repetitions, reference is made to the first aspect directed to the claimed microscope concerning embodiments and advantages of the method according to the second aspect.

In a preferred embodiment, the deflection element is configured to be movable, pivotable, foldable and/or mounted on a rotatable turret such that it can be placed at least into said first and second positions. The deflection element can be moved in many different ways, particularly by moving it sideways, pivoting it out of the optical axis, folding it up, down or to the side, or by turning it out of the optical axis on a rotatable turret. As only relatively small components need to be moved, the transmitted-light illumination module is compact and easy to motorise as only the deflection element has to be moved.

In another preferred embodiment, the microscope comprises a control unit for controlling a movement of the deflection element into its first and second positions. The control unit is configured to automatically control the movement of the deflection element into its first position, especially when the sample is to be illuminated by the transmitted-light beam, and into its second position, especially when the sample is manipulated/pipetted.

In another preferred embodiment, in its second position, the deflection element is arranged outside the optical axis such that the transmitted-light beam path is not deflected by the deflection element or (at least) not deflected in a direction of the sample to be examined. In this embodiment, the deflecting surface of the deflection element is either completely moved out of the transmitted-light beam path such that no deflection of the transmitted-light beam is possible at all, or the deflection surface is positioned e. g. by laterally moving and/or pivoting the deflection element such that the transmitted-light beam is deflected but not in a direction of the sample to be examined and/or manipulated.

In another preferred embodiment, as already stated above, in its second position, the deflection element is arranged outside the optical axis such that free access to the sample to be examined is provided along the optical axis on the side opposite to the imaging optics.

In another preferred embodiment, the microscope comprises a guide for a sample manipulator, the guide being arranged opposite to the imaging optics. In other words, when the sample manipulator is mounted into the guide and the deflection element is placed into its second position, no obstacles are between the sample manipulator and the sample itself. In this case, for example, an active substance can be dropped in a vertical direction via a pipette onto the sample.

Preferably, the guide is arranged such that the main axis of the sample manipulator to be placed into the guide is aligned with the optical axis. This embodiment is particularly advantageous if the sample manipulator is a pipette since if the pipette is aligned with its main axis with the optical axis of the microscope, the amount of liquid to be pipetted is stable as it does not change with a different inclination of the pipette.

The guide for the sample manipulator can for example be statically installed in the microscope or it can be movable in a direction of the optical axis of the microscope. Since only the deflection element is to be moved, the guide can be statically installed in the microscope and thus does not have to be moved together with the transmitted-light illumination module, as it is done in the prior art.

Furthermore, in another advantageous embodiment, the deflection element can be moved into its second position upon direct or indirect contact with the sample manipulator, e. g. if the sample manipulator/pipette touches the deflection element or presses against it. This would have the advantage that no motorisation for moving the deflection element from its first into its second position is necessary and to ensure that as soon as the sample is manipulated/pipetted the deflection element is moved into its second position outside the optical axis. Since pipette tips and, in general, tips of other sample manipulators are usually quite soft and/or sensitive, it is advantageous to use a mechanism that refers to the main part of the pipette/sample manipulator and triggers movement of the deflection element into its second position. With such a mechanism, the pipette/manipulator tip does not touch the deflection element. This mechanism can be realised by a referencing element referencing the main body of the sample manipulator, where the referencing element is attached or otherwise connected to the sample manipulator. This referencing element is dimensioned such that as soon as the sample manipulator/pipette is placed into the guide and the tip is in the proper position, the referencing element arrives at a position where it can trigger movement of the deflection element into its second position. This triggering can be simply realised by the referencing element pressing against the deflection element which is then mechanically transferred into its second position, or, alternatively, electro-mechanically transferred into its second position by means of the control unit after detection of the contact.

Alternatively, the guide is moveable in the direction of the optical axis. In this case, the sample manipulator/pipette can be placed into the guide for longer periods. If it becomes necessary to manipulate/pipette the sample, the guide itself is moved along the optical axis into the proper position. In this case, it is advantageous if the guide itself includes a referencing element referencing the main body of the sample manipulator/pipette once it is placed in the guide. In a similar way, when the guide together with the sample manipulator is in the proper position for manipulating the sample, the referencing element would trigger movement of the deflection element into its second position.

It is preferred that the referencing element is formed and arranged such that when contacting the deflection element in its first position, the deflection element is transferred into its second position.

In a preferred embodiment, the microscope further comprises an incident-light illumination module comprising an incident-light light source and incident-light optics for generating an incident-light beam path. Regarding the structure and purpose of such an incident-light illumination module, reference is made to DE 10 2017 110 638 B3 already discussed above. Such a microscope can advantageously be used for examining a sample in phase contrast transmitted-light illumination and/or in fluorescence incident-light illumination. Fluorescence light emitted from the sample is usually imaged through the same imaging optics as the transmitted light. Typically, the incident-light beam path is coupled into the optical axis of the microscope via a dichroic mirror arranged between the microscope objective and the microscope tube.

In the present invention, observation of the sample during pipetting is possible using incident-light illumination, such as that used for fluorescence imaging. In this case the imaging/detection optics (objective, etc.) is still aligned with the sample area to be imaged/detected. This is not the case if the entire sample holder is moved for pipetting.

In such a microscope, it is advantageous if the deflection element of the transmitted-light illumination module is configured such that the deflection element is transferred into its second position as soon as the incident-light illumination module is activated and/or such that the deflection element remains in its second position as long as the incident-light illumination module is activated. In other words, the deflection element is removed from the first position or transmitted-light illumination position as soon as excitation light falls on the sample through the imaging optics/microscope objective to generate fluorescent light in the sample. In this case, when using an LED light source, especially a white light LED as a transmitted-light light source, luminescence may occur when excited by an external light source such as the incident-light, a part of which typically transmits the sample and may thus reach the transmitted-light light source. The generated luminescent light is perceived as a disturbing background in the florescence image. DE 10 2017 110 638 B3 provides a solution to this problem. The present application provides a different solution by transferring the deflection element into its second position as soon as the incident-light illumination module is activated with the result that the deflection element is arranged outside the optical axis and an optical path between the sample and the transmitted-light light source is disabled. Thus, the excitation light can no longer reach the LED light source which can not produce any disturbing luminescent light.

Embodiments of the present inventive concept provide a method for examining a sample in a microscope as already stated above. The above explanations, further embodiments and advantageous in connection with the first aspect apply to the method according to the second aspect in the same manner. In order to avoid repetitions, only some of the preferred embodiments of the method according to the second aspect are cited in the following.

In a preferred embodiment, the deflection element can be placed into the first and second positions by moving and/or pivoting the deflection element between the first and second positions and/or by folding the deflection element and/or by rotating a turret on which the deflection element is mounted.

In another preferred embodiment, the deflection element, in its second position, is arranged such that free access to the sample is provided along an optical axis defined by said imaging optics. In another preferred embodiment, alternatively an incident-light beam is provided for imaging at least a part of the sample by said imaging optics using the incident-light beam, wherein, in the presence of the incident-light beam, the deflection element is placed into its second position.

According to a third aspect, a computer program with program code is provided to perform the method according to the second aspect when the computer program is executed on a processor, in particular on a processor associated with the control unit of the microscope according to the first aspect.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### Short description of the figures

- **Figure 1**: schematically shows an embodiment of a microscope for examining a sample.
- **Figure 2**: schematically shows a microscope according to an embodiment of the present invention.
- **Figure 3**: schematically shows a microscope according to another embodiment of present application.
- **Figure 4**: schematically shows a microscope according to still another embodiment of the present invention and
- **Figure 5**: schematically shows a microscope according to still another embodiment of the present invention.

### Detailed description

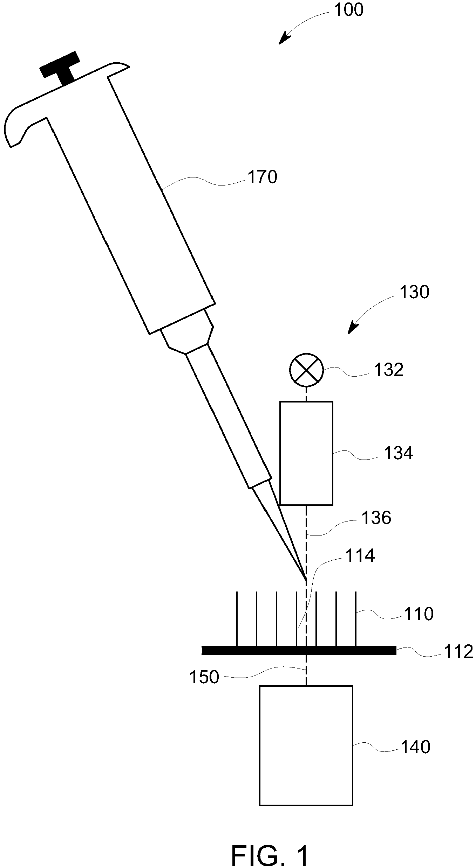

Figure 1 schematically shows a common microscope 100 for examining a sample, comprising a transmitted-light illumination module 130 and imaging optics 140 and a sample holder 112 in the form of a microscope stage. The sample holder 112 is configured to receive a sample container, in this case a multiwell plate 110. The sample in a well of the multiwell plate 110 is depicted 114. The imaging optics 140 essentially comprise a microscope objective defining the optical axis 150 and typically a microscope tube followed by an eyepiece and/or a camera. It should be noted that in the present application, imaging optics 140 at least comprise the microscope objective. The transmitted-light illumination module 130 comprises a transmitted-light light source 132 followed by transmitted-light optics 134 for generating a transmitted-light beam path 136 directed onto the sample 114 to be examined.

In such a common microscope, when an active substance needs to be added to the biological sample 114, a pipette 170 is brought into a position angularly to the side of a well of the multiwell plate 110 as shown in figure 1. However, the inclined position of the pipette 170 influences the amount of liquid which is pipetted onto the sample 114. Further, it is quite difficult for an operator to find the right well of the multiwell plate 110 containing the sample 114.

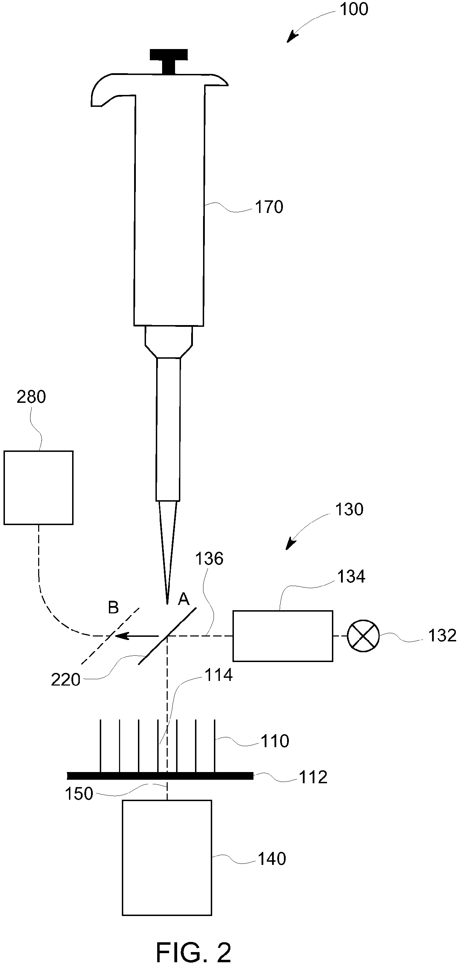

In the microscope 100 of Figure 2, the transmitted-light beam path 136 is deflected by the deflection element 220. The transmitted-light beam path 136 is generated by the transmitted-light illumination module 130 comprising a transmitted-light light source 132 and transmitted-light optics 134 in the same manner as in the microscope of Figure 1. With the deflection element 220 in its first position A, the transmitted-light beam path 136 is deflected onto and aligned with the optical axis 150. In this manner, the transmitted-light beam is directed onto a sample 114 in the multiwell plate 110 which is located on the sample holder/microscope stage 112. The transmitted-light beam transmits the sample 114 and the transmitted light is imaged by the imaging optics 140. The imaging optics can be the same as in Figure 1. In the embodiment of Figure 2, the deflection element 220 is laterally movable into a second position B as shown in Figure 2. Advantageously, the movement of the deflection element 220 is controlled by a control unit 280. In its second position B the deflection element 220 no longer deflects the transmitted-light beam onto the sample 114 but onto a different region of the object region, preferably outside the multiwell plate 110. As shown in Figure 2, in its second position B the deflection element is arranged outside the optical axis 150. Thus, a sample manipulator 170, here a pipette 170 can be moved freely onto the optical axis 150 in the direction of the sample 114 in order to add e. g. an active substance into the corresponding well containing the sample 114 without being hindered by the deflection element 220. The pipette 170 can also be replaced by any other sample manipulator; the deflection element is depicted as a mirror in Figure 2 but can be exchanged by any other deflection element. Further, the deflection element 220, in its second position B, can completely be pivoted out of the transmitted-light beam path 136 such that the transmitted-light beam path 136 is directed into a horizontal direction. In this case, it is possible to absorb the transmitted-light beam in a certain position laterally further away from position B.

By only moving the relatively light deflection element 220, the transmitted-light illumination module 130 is compact and easy to motorize. Also the space requirements are relatively small. Furthermore, the multiwell plate 110 does not have to be moved such that no disturbances occur when manipulating/pipetting the sample 114. With the pipette 170 in the vertical position, the amount of liquid pipetted does not change as no inclination of the pipette 170 occurs.

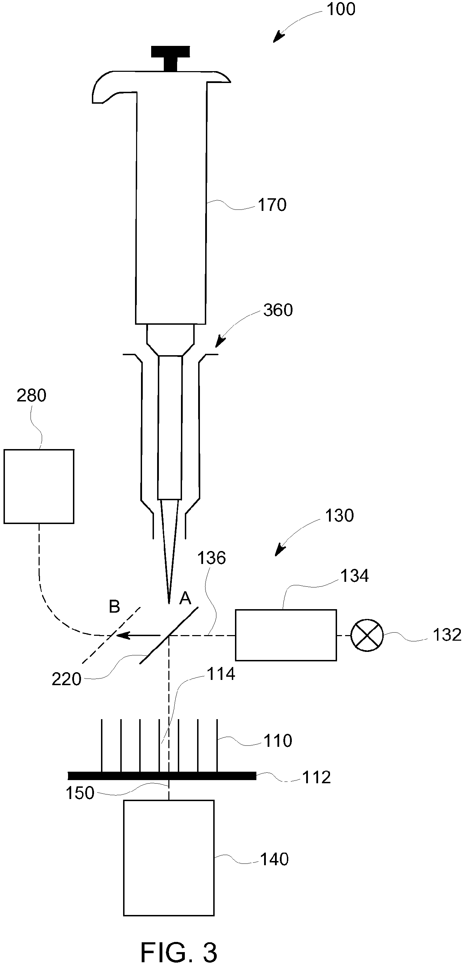

Figure 3 schematically shows another embodiment of a microscope 100, same reference signs designating same elements. The main difference to the embodiment according to Figure 2 is that the sample manipulator or pipette 170 is placed into a guide 360. Such a guide can either be arranged statically or, for example, movable in the direction of the optical axis 150 of the microscope 100. Use of such a guide 360 allows an automated operation of manipulating or pipetting the sample 114.

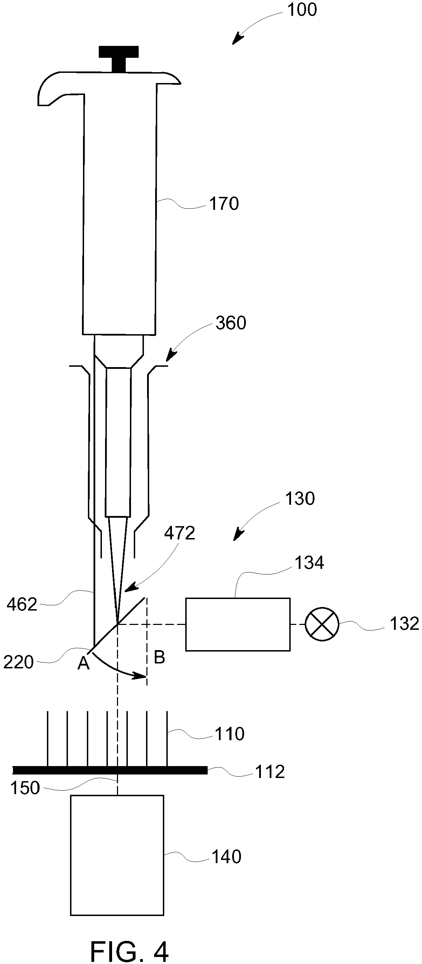

Figure 4 shows still another embodiment of a microscope 100. The embodiment of Figure 4 essentially corresponds to the embodiment of Figure 3; same reference signs designate same elements. The main difference to Figure 3 is that the pipette 170 includes a referencing element 462 referencing the main body of the pipette 170. In this embodiment, the guide 360 is statically installed in the microscope 100. The pipette 170 is placed into the guide 360 and guided in the direction of the sample 114, the referencing element 462 touches the deflection element 220 before the tip 472 of the pipette 170 touches the surface of the deflection element 120. By exerting a pressure onto the deflection element 220, the referencing element 462 triggers a movement of the deflection element 220 from its first position A into its second position B.

In the embodiment of Figure 4, the deflection element 220 is pivotable from position A into position B as shown in Figure 4. The pivoting movement can be triggered mechanically by referencing element 462, it can, on the other hand, also be triggered by a control unit 280 (as shown in Figure 3) which detects a contact of the referencing element 462 with the deflection element 220 in order to electro-mechanically initiate movement of the deflection element from position A to position B. With the deflection element in its second position B, the transmitted-light beam is no longer deflected in the direction of the multiwell plate 110 but reflected back to the light optics 134. In its position B, the deflection element 220 is arranged outside the optical axis such that the pipette 170 has direct access to the sample 114 along the optical axis 150.

In case of a guide 360 moveable in the direction of the optical axis 150, the referencing element 462 can be located at the guide 360 in order to trigger movement of the deflection element 220 from position A into position B.

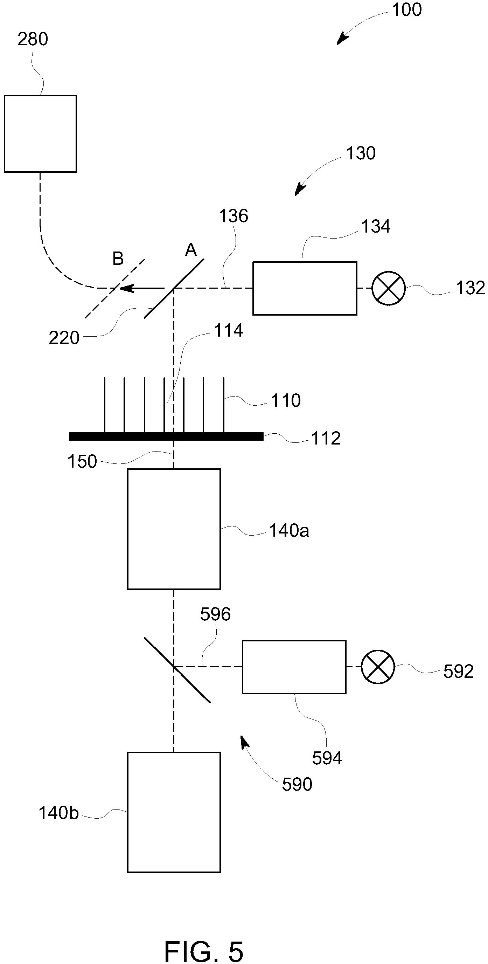

Figure 5 shows still another embodiment of a microscope 100. Regarding movement of the deflection element 220 from its first into its second position, reference is made to the embodiments according to Figures 2-4. Same reference signs designate same elements as in the previous figures. The main difference of the embodiment of Figure 5 to the ones of the previous figures is that an incident-light illumination module 590 is provided, comprising an incident-light light source 592 and incident-light optics 594 for generating an incident-light beam path 596. This beam path 596 is deflected by a dichroic mirror (no reference sign) onto the optical axis 150 and aligned with the optical axis 150 for incident-light illumination of the sample 114. As already discussed above, a microscope for examining a sample in incident-light and transmitted-light illumination is known from DE 10 2017 110 638 B3. In this structure, the imaging optics are typically split into imaging optics 140a and 140b, where 140a usually comprises the microscope objective while 140b typically comprises the remaining imaging optics components, such as microscope tube, eyepiece and/or camera.

While manual or automated manipulation or pipetting of sample 114 - although not shown in Figure 5 - is still possible (please refer to Figures 2 to 4) after having moved the deflection element 220 from position A into position B, another advantage can be seen in that after having moved the deflection element 220 into position B, the optical path between sample 114 and transmitted-light light source 132 does no longer exist. Thus, the part of the light of the incident-light beam, which passes the sample 114 cannot be deflected into the transmitted-light illumination module 130 or into the transmitted-light light source 132 such that no excitation of this light source 132, e. g. an LED light source, is possible. The effect of luminescence as already explained above, therefore no longer occurs.

### List of reference signs

- 100: microscope
- 110: sample container, multiwell plate
- 112: sample holder, microscope stage
- 114: sample
- 130: transmitted-light illumination module
- 132: transmitted-light light source
- 134: transmitted-light optics
- 136: transmitted-light beam path
- 140: imaging optics
- 140a: part of imaging optics
- 140b: part of imaging optics
- 150: optical axis
- 170: sample manipulator, pipette
- 220: deflection element
- 280: control unit
- 360: guide
- 462: referencing element
- 472: tip
- 590: incident-light illumination module
- 592: incident-light light source
- 594: incident-light optics
- 596: incident-light beam path
- A: first position
- B: second position

## Claims

1. A microscope (100) for examining a sample (114), said microscope comprising imaging optics (140) for imaging at least a part of the sample to be examined, said imaging optics defining an optical axis (150),
a transmitted-light illumination module (130), said module comprising a transmitted-light light source (132) and transmitted-light optics (134) for generating a transmitted-light beam path (136), and a deflection element (220) suited for deflecting the transmitted-light beam path,
wherein the deflection element (220) is configured to be placed at least into a first and a second position (A,B), wherein in the first position (A), the deflection element (220) is arranged on the optical axis (150) such that the transmitted-light beam path (136) is deflected onto and aligned with the optical axis (150), and, in the second position (B), the deflection element (220) is arranged outside the optical axis (150).

2. The microscope (100) of claim 1, wherein the deflection element (220) is configured to be moveable, pivotable, foldable and/or mounted on a rotatable turret such that it can be placed at least into said first and second positions (A,B).

3. The microscope (100) of claim 1 or claim 2, wherein the microscope comprises a control unit (280) for controlling a movement of the deflection element (220) into the first and second positions (A,B).

4. The microscope (100) of any one of claims 1 to 3, wherein, in its second position (B), the deflection element (220) is arranged outside the optical axis (150) such that the transmitted-light beam path (136) is not deflected by the deflection element (220) or not deflected in a direction of the sample (114) to be examined.

5. The microscope (100) according to any one of the claims 1 to 4, wherein, in its second position (B), the deflection element (220) is arranged outside the optical axis (150) such that free access to the sample (114) to be examined is provided along the optical axis (150) on the side opposite to the imaging optics (140).

6. The microscope (100) according to any one of the claims 1 to 5, wherein the deflection element (220) is configured to be moved into the second position (B) upon contact with a sample manipulator (170).

7. The microscope (100) of any one of the claims 1 to 5, comprising a guide (360) for a sample manipulator (170), the guide being arranged opposite to the imaging optics (140).

8. The microscope (100) of claim 7, wherein the guide (360) is arranged such that the main axis of the sample manipulator (170) to be placed into the guide (360) is aligned with the optical axis (150).

9. The microscope (100) of claim 7 or claim 8, wherein the guide (360) is statically installed in the microscope (100).

10. The microscope (100) of claim 9, wherein the sample manipulator (170) to be placed into the guide (360) includes a referencing element (462) referencing the main body of the sample manipulator (170).

11. The microscope (100) of claim 7 or claim 8, wherein the guide (360) is movable in the direction of the optical axis (150).

12. The microscope (100) of claim 11, wherein the guide (360) includes a referencing element (462) referencing the main body of the sample manipulator (170) to be placed in the guide (360).

13. The microscope (100) of claim 10 or 12, wherein the deflection element (220) is configured to be moved into the second position (B) upon contact with the referencing element (462).

14. The microscope (100) of any one of the preceding claims, further comprising an incident-light illumination module (590) comprising an incident-light light source (592) and incident-light optics (594) for generating an incident-light beam path (596).

15. The microscope of claim 14, wherein the deflection element (220) of the transmitted-light illumination module (130) is configured such that the deflection element (220) is transferred into its second position (B) as soon as the incident-light illumination module (590) is activated and/or such that the deflection element (220) remains in its second position (B) as long as the incident-light illumination module (590) is activated.

16. A method for examining a sample (114) in a microscope (100) by means of a transmitted-light beam transmitting at least a part of the sample, said transmitted-light beam being generated by a transmitted-light light source (132) and transmitted-light optics (134), and by imaging said part of the sample by imaging optics (140) using the transmitted-light beam transmitted through the sample,
wherein a deflection element (220) is provided for alternatively enabling or disabling transmission of the sample (114) by the transmitted-light beam, wherein, for enabling transmission of the sample, the deflection element (220) is placed into a first position (A) for deflecting the transmitted-light beam and directing it onto the sample, and wherein, for disabling transmission of the sample (114), the deflection element (220) is placed into a second position (B) in which an optical path between the sample (114) and the transmitted-light light source (132) is disabled.

17. The method of claim 16, wherein the deflection element (220) can be placed into the first and second positions (A,B) by moving and/or pivoting the deflection element (220) between the first and second positions (A,B) and/or by folding the deflection element (220) and/or by rotating a turret on which the deflection element (220) is mounted.

18. The method of claim 16 or claim 17, wherein, in its second position (B), the deflection element (220) is arranged such that free access to the sample (114) is provided along an optical axis (150) defined by said imaging optics (140).

19. The method of any one of claims 16 to 18, wherein alternatively an incident- light beam is provided for imaging at least a part of the sample (114) by said imaging optics (140) using the incident-light beam, wherein, in the presence of the incident-light beam, the deflection element (220) is placed into its second position (B).

20. A computer program with program code to perform the method of any one of claims 16 to 19 when the computer program is executed on a processor, in particular on a processor associated with the control unit (280) of the microscope (100) of claim 3.
